# EUROPÄISCHE PATENTSCHRIFT

(11) **EP 3 331 339 B1**
(45) Veröffentlichungstag und Bekanntmachung des Hinweises auf die Patenterteilung: **26.08.2020**
(21) Anmeldenummer: 17751268.8
(22) Anmeldetag: 19.07.2017
(51) Int. Cl.: A01B 15/02, A01B 23/02

(54) **GRUBBERSCHAR RÜCKSEITIG VERSCHRAUBT**
CULTIVATOR WHICH IS SCREWED ON THE REAR FACE
SOC DE CULTIVATEUR VISSÉ PAR L'ARRIÈRE

(30) Priorität: 18.08.2016 DE 102016115323
(43) Veröffentlichungstag der Anmeldung: 13.06.2018
(73) Patentinhaber: Betek GmbH & Co. KG, 78733 Aichhalden (DE)
(72) Erfinder: SEIFRIED, Fabian, 78662 Herrenzimmern (DE); SCHNEIDER, Uwe, 78628 Rottweil (DE); RUGGABER, Stefan, 78757 Fluorn-Winzeln (DE); ESSIG, Wolfgang, 72348 Rosenfeld (DE)
(74) Vertreter: Herrmann, Jochen
(86) Internationale Anmeldenummer: PCT/EP2017/068247
(87) Internationale Veröffentlichungsnummer: WO 2018/033337

(56) Entgegenhaltungen:
- EP-A1- 2 959 758
- DE-A1-102013 102 420
- DE-A1-102014 116 619
- FR-A1- 2 603 151
- US-B1- 6 289 996

## Beschreibung

Die Erfindung betrifft eine Grubberschar für eine landwirtschaftliche Bodenbearbeitungsmaschine mit einem Basisteil, das an einem Schneidenträger ein Schneidelement aufweist, wobei das Basisteil zumindest eine Schraubaufnahme zur Befestigung an einem Träger, insbesondere einem Zinken der landwirtschaftlichen Bodenbearbeitungsmaschine, aufweist.

Die Erfindung betrifft weiterhin ein Werkzeugsystem für eine landwirtschaftliche Bodenbearbeitungsmaschine mit einer Grubberschar und einem Träger, insbesondere einem Zinken der landwirtschaftlichen Bodenbearbeitungsmaschine, wobei die Grubberschar ein Basisteil mit einem an einem Schneidenträger angeordneten Schneidelement aufweist wobei das Basisteil zumindest eine Schraubaufnahme und der Träger zumindest eine Montagebohrung zur Befestigung der Grubberschar an dem Träger aufweisen und wobei die Grubberschar durch zumindest eine Schraube an dem Träger gehalten ist.

Eine solche Grubberschar und ein solches Werkzeugsystem sind aus der DE 10 2013 102 420 A1 bekannt. Eine darin gezeigte Scharspitze und ein anschließendes Leitelement sind mittels Schraubverbindungen mit einem Zinken einer landwirtschaftlichen Bodenbearbeitungsmaschine verbunden. Die Scharspitze weist ein Basisteil mit einem in Arbeitsrichtung weisenden Schneidenträger auf, an den Schneidelemente in Form von Hartmetallelementen befestigt sind. Im Anschluss an die Schneidelemente bedecken Hartstoffelemente einen Teil der in Arbeitsrichtung weisenden Oberfläche des Basisteils. Das Basisteil ist von einer Schraubaufnahme durchdrungen. Der Zinken weist eine dazu korrespondierende Bohrung auf. Eine Schraube kann so durch die Schraubaufnahme und die Bohrung gesteckt und rückseitig mit einer Mutter festgelegt werden. Damit ist die Scharspitze mit dem Zinken verbunden. Der Schraubenkopf der Schraube weist in Arbeitsrichtung der Grubberschar. Um den Verschleiß des Schraubenkopfs zu verringern ist dieser versenkt in dem Basisteil angeordnet. In Arbeitsrichtung vor der Schraubaufnahme ist ein Deflektor angeordnet, welcher abgetragenes Bodenmaterial an der Schraubaufnahme vorbeileitet. Dennoch kann es nicht vermieden werden, dass Erde bis zum Schraubenkopf in die Schraubaufnahme eindringt. Dies führt zu einem Verschleiß des Schraubenkopfes. Weiterhin wird der Zugang zu dem Schraubenkopf von der Erde verstopft. Zum Lösen der Schraube muss diese Erde zunächst entfernt werden, bevor ein geeignetes Werkzeug in die dafür vorgesehene Werkzeugaufnahme des Schraubenkopfes eingeführt werden kann. Auch Steine können sich in der Schraubaufnahme oberhalb des Schraubenkopfes einklemmen, was den Zugang zu der Schraube weiter erschwert. Das offenbarte Basisteil weist dem Leitelement zugewandt eine Aufnahme auf, in welche ein Steckansatz des Leitelements eingeführt ist. Auch der Steckansatz ist von einer Schraubaufnahme durchdrungen, durch welche eine Schraube zum Verbinden des Leitelements mit dem Zinken geführt ist. Die Aufnahme deckt den Steckansatz und damit die Schraubaufnahme in Arbeitsrichtung der Werkzeugkombination ab. Dadurch ist die Schraube vor Abrieb geschützt.

Eine ähnliche Scharspitze ist auch aus der DE 10 2014 116 619 A1 bekannt.

EP 2 959 758 A1 beschreibt ein landwirtschaftliches Bodenbearbeitungswerkzeug, das über einen Schnellwechsel-Adapter an einen Befestigungschaft angebaut werden kann.

Aus FR 2 603 151 ist ein Bodenbearbeitungswerkzeug bekannt, bei dem eine Scharspitze zusammen mit einem Leitelement an einem Befestigungschaft einer landwirtschaftlichen Bodenbearbeitungsmaschine befestigt ist. Die Scharspitze und das Leitelement sind jeweils aus einem Blechzuschnitt gefertigt und greifen über eine verzahnte Verbindung ineinander.Es ist Aufgabe der Erfindung, eine Grubberschar bereitzustellen, welche eine verschleißfeste und leicht zugängliche, lösbare Verbindung zu einem Träger ermöglicht. Es ist weiterhin Aufgabe der Erfindung, ein entsprechendes Werkzeugsystem bereitzustellen.

Die Aufgabe der Erfindung wird gelöst durch einen Grubberschar nach Anspruch 1.

Die Ausführung mit der durchgängigen, in Werkzeugvorschubrichtung von zumindest einem Verschleißschutzelement abgedeckten Schraubaufnahme kann einfach und kostengünstig hergestellt werden. Durch das Verschleißschutzelement mit seiner hohen Abriebbeständigkeit ist die Schraubaufnahme über die Lebenserwartung der Grubberschar hinaus dauerhaft verschlossen.

Die als Sackloch ausgeführte Schraubaufnahme kann vorteilhaft auch in Bereichen der Grubberschar, welche in Werkzeugvorschubrichtung nicht von Verschleißschutzelementen abgedeckt sind, vorgesehen sein, wobei die durchgängig geschlossene Vorderseite der Grubberschar erhalten bleibt. Sind Verschleißschutzelemente im Bereich Schraubaufnahme angeordnet, so ist durch die als Sacklöcher ausgeführten Schraubaufnahmen vorteilhaft sichergestellt, dass kein Lot, Klebstoff oder sonstiges stoffschlüssiges Befestigungsmaterial wie es zum Befestigen von Verschleißschutzelementen an das Basisteil der Grubberschar verwendet wird, in die Schraubaufnahme gelangt und das darin vorgesehene Innengewinde verschließt.

In beiden Ausführungen bildet die Grubberschar in Werkzeugvorschubrichtung eine geschlossene Oberfläche aus, an welcher das abgetragene Erdreich leicht vorbeigleiten kann. Deflektoren oder ähnliches, um die Erde an bestimmten Bereichen der Grubberschar vorbeizuleiten, sind nicht erforderlich.

Um eine besonders widerstandsfähige Vorderseite der Grubberschar zu erhalten kann es vorgesehen sein, dass die in Werkzeugvorschubrichtung V ausgerichtete Vorderseite der Grubberschar zumindest teilweise mit Verschleißschutzelementen bedeckt ist, dass zumindest eines der Verschleißschutzelemente bis an das Schneidelement herangeführt ist und dass die Verschleißschutzelemente bis über den Bereich zumindest einer Schraubaufnahme angeordnet sind. Vorteilhaft sind die Verschleißschutzelemente in Bereichen angeordnet, welche einer hohen mechanische Belastung ausgesetzt sind. Dadurch, dass eines der Verschleißschutzelemente bis an das Schneidelement herangeführt ist, ist der bezüglich Abrieb stark belastete Bereich der Grubberschar unmittelbar nach dem Schneidelement vor Verschleiß geschützt. Werden die Verschleißschutzelemente bis über den Bereich der zumindest einen, beispielsweise als Sackloch ausgelegten Schraubaufnahme geführt, so kann verhindert werden, dass das Basisteil in diesem Bereich abgerieben und dadurch die anfänglich in Werkzeugvorschubrichtung geschlossene Schraubaufnahme freigelegt wird. Vorteilhaft ist der gesamte Bereich von dem Schneidelement bis über die zumindest eine Schraubaufnahme mit Verschleißschutzelementen belegt, womit ein durchgängiger Schutz der mechanisch besonders stark belasteten Bereiche der Grubberschar erreicht werden kann.

Um Spannungsspitzen im Bereich der zumindest einen Schraubaufnahme zu vermeiden kann es vorgesehen sein, dass die als Sackloch ausgeführte Schraubaufnahme an ihrem inneren Ende abgerundet ist oder dass Übergänge zwischen den inneren Oberflächen der als Sackloch ausgeführten Schraubaufnahme abgerundet sind. Durch das in den Boden eingreifende Schneidelement sowie den Überstand der Grubberschar in ihrem vorderen Bereich über den rückseitig angeordneten Träger steht die in Werkzeugvorschubrichtung weisende Oberfläche der Grubberschar zumindest bereichsweise unter Zugspannung. Am inneren Ende der Schraubaufnahme ist die verbleibende Materialstärke des Basisteils am geringsten, so dass hier die höchsten mechanischen Spannungen auftreten. Durch die abgerundeten Oberflächen kann die Bruchgefahr für die Grubberschar in diesem Bereich reduziert werden.

Während des Einsatzes ist die Grubberschar starken Kräften und Vibrationen ausgesetzt. Um zu vermeiden, dass sich die Schraubverbindung zu dem Träger löst und die Grubberschar verloren geht kann es vorgesehen sein, dass das Gewinde der Schraubaufnahme ausgebildet ist, um zusammen mit einer Schraube eine selbsthemmende Schraubverbindung zu bilden.

Um eine Verformung oder einen Bruch des Basisteils während des Einsatzes der Grubberschar zu vermeiden und um eine Schraubaufnahme mit einer ausreichenden Tiefe und damit eine sichere Schraubverbindung zwischen dem Träger und der Grubberschar zu ermöglichen, kann es vorgesehen sein, dass die in Richtung der Längserstreckung der zumindest einen Schraubaufnahme gemessene Dicke des Basisteils im Bereich der zumindest einen Schraubaufnahme zwischen 5 mm und 120 mm, vorzugsweise zwischen 9 mm und 35 mm, liegt.

Während des Einsatzes der Grubberschar greifen die Hauptkräfte an dem Schneidelement entgegen der Werkzeugvorschubrichtung an. Das Trägerelement endet vor dem Schneidenträger des Basisteils, an welchem das Schneidelement befestigt ist. Das Basisteil ist somit in diesem Bereich von hinten nicht mehr durch den Träger abgestützt. Dies führt, wie bereits dargestellt, zu hohen Zugspannungen auf der Vorderseite der Grubberschar. Durch eine geeignete Positionierung der zumindest einen Schraubverbindung kann eine Durchbiegung des Basisteils und damit die Ausbildung von zu hohen Spannungen im Bereich der Oberfläche der Grubberschar vermieden werden. Vorteilhaft kann es dazu vorgesehen sein, dass der Abstand der zumindest einen, in Werkzeugvorschubrichtung (V) vorderen Schraubaufnahme zu einer Schneide des Schneidelements in einem Bereich zwischen 10 mm und 350 mm liegt. Bei größeren Abständen zwischen der Schraubenaufnahme und dem Schneidelement sollte aufgrund auftretender Schwingungen während des Arbeitseinsatzes eine seitliche Abstützung des Scharkörpers am Grindel erfolgen (Haltestege/Stützerhebungen).

Entsprechend einer bevorzugten Ausführungsform der Erfindung kann es vorgesehen sein, dass zwei Schraubaufnahmen in dem Basisteil vorgesehen sind und dass der Abstand zwischen den Schraubaufnahmen in einem Bereich zwischen 20 mm und 500 mm liegt. Durch die Montage der Grubberschar an dem Träger über zwei Schraubverbindungen kann eine mechanisch hoch belastbare Verbindung der Bauteile erreicht werden. Durch den gewählten Abstand zwischen den beiden Schraubaufnahmen kann die Durchbiegung der Grubberschar während des Einsatzes sehr gering gehalten werden.

Eine erfindungsgemäße Grubberschar kann dergestalt sein, dass die als Durchgangsbohrung ausgeführte Schraubaufnahme oder der Bereich, unter dem die als Sackloch ausgeführte Schraubaufnahme endet, zur Vorderseite der Grubberschar hin von einem einzelnen Verschleißschutzelement vollständig abgedeckt ist, wobei die in der Ebene der Vorderseite des Basisteils gemessenen Dimensionen des die Schraubaufnahme abdeckenden Verschleißschutzelements derart gewählt sind, dass das Verschleißschutzelement zumindest in seinem Befestigungsbereich über den in die Ebene der Vorderseite projizierten Rand der Schraubaufnahme übersteht, insbesondere, dass das Verschleißschutzelement umlaufend zumindest 1 mm über den in die Ebene der Vorderseite projizierten Rand der Schraubaufnahme übersteht. Vorteilhaft ist dadurch kein Spalt, wie er zwischen zwei Verschleißschutzelementen vorliegt, über dem Bereich der Schraubaufnahmen angeordnet. Dadurch können Spannungsspitzen, welche zwischen zwei Verschleißschutzelementen auftreten können, im Bereich der zumindest einen Schraubaufnahmen vermieden werden. Durch einen Überstand des Verschleißschutzelements von 2mm über den Rand oder den auf die Vorderseite projizierten Rand der Schraubaufnahme ist auch bei einer als Durchgangsbohrung ausgeführten Schraubaufnahme umlaufend eine ausreichend große Auflagefläche gebildet, an welcher das Verschleißschutzelement mit dem Basisteil der Grubberschar verlötet, verklebt oder in sonstiger Weise stoffschlüssig verbunden werden kann.

Die das Werkzeugsystem betreffende Aufgabe der Erfindung wird dadurch gelöst, dass die Schraubaufnahme als Sackloch mit einem Innengewinde ausgeführt ist, welche in eine entgegen der Werkzeugvorschubrichtung der Grubberschar ausgerichtete Anlagefläche der Grubberschar eingelassen ist oder dass die Schraubaufnahme als Durchgangsbohrung mit einem Innengewinde ausgeführt ist, welche in Werkzeugvorschubrichtung durch zumindest ein Verschleißschutzelement abgedeckt ist und dass die Grubberschar durch zumindest eine Schraube an dem Träger gehalten ist, welche von der entgegen der Werkzeugvorschubrichtung V liegenden Seite des Trägers durch die zumindest eine Montagebohrung geführt und in die Schraubaufnahme eingeschraubt ist. Die Schraube und die Schraubaufnahme sind so nur von der, bezogen auf die Werkzeugvorschubrichtung, Rückseite des Werkzeugsystems zugängig. Damit sind insbesondere die Schraube und der Schraubenkopf vor vorbeigleitendem Erdreich geschützt angeordnet. Die in Werkzeugvorschubrichtung weisende Vorderseite der Grubberschar kann durchgängig ausgeführt werden. Angriffspunkte für einen verstärkten Abrieb werden so vermieden. Durch die geschützte Anordnung der Schraube kann deren vorzeitiger Verschleiß vermieden werden. Dadurch wir eine höhere Standzeit des Werkzeugsystems erreicht. Gleichzeitig wird eine Beschädigung einer Werkzeugaufnahme am Schraubenkopf der Schraube durch die vorbeigleitende Erde vermieden. Die Schraubverbindung kann so auch nach langer Einsatzdauer einfach gelöst werden.

Wenn es vorgesehen ist, dass die zumindest eine Schraube bei montiertem Werkzeugsystem beabstandet zu einem inneren Ende der als Sackloch ausgeführte Schraubaufnahme oder beabstandet zu dem Verschleißschutzelement, welches die als Durchgangsbohrung ausgeführte Schraubaufnahme abdeckt, endet, so kann die Grubberschar mit ihrer Anlagefläche auch bei größeren Dickentoleranzen der Bauteile durch die Schraubverbindung fest an den Träger angezogen werden. Die Grubberschar liegt somit rückseitig fest an dem Träger an und kann auf ihre Vorderseite einwirkende Kräfte auf den Träger übertragen.

Vorteilhaft weist das Werkzeugsystem eine zuvor beschriebene Grubberschar auf.

Die Erfindung wird im Folgenden anhand eines in den Zeichnungen dargestellten Ausführungsbeispiels näher erläutert:
Es zeigen:
- Fig. 1: in einer seitlichen, zum Teil im Schnitt dargestellten Ansicht ein Werkzeugsystem mit einer Grubberschar und einem Träger;
- Fig. 2: ein Werkzeugsystem in einer Ansicht entsprechend Figur 1 mit einem erweiterten, mittels Verschleißschutzelementen abgedeckten Bereich eines Basisteils der Grubberschar;
- Fig. 3: das in Figur 2 gezeigte Werkzeugsystem in einer Ansicht von vorne,
- Fig. 4: ein Werkzeugsystem in einer Ansicht entsprechend Figur 2 mit einer alternativen Ausführung von in dem Basisteil angeordneten Schraubaufnahmen und
- Fig. 5: einen Ausschnitt des in Figur 4 gezeigten Werkzeugsystems im Bereich einer vierten Schraubaufnahme.

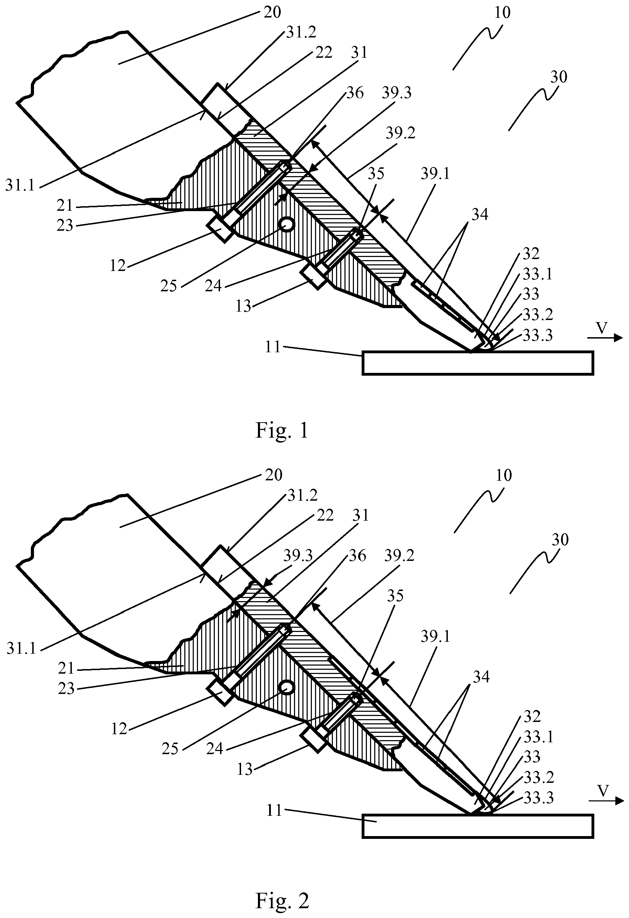

Figur 1 zeigt in einer seitlichen, zum Teil im Schnitt dargestellten Ansicht ein Werkzeugsystem 10 mit einer Grubberschar 30 und einem Träger 20. Die Grubberschar 30 weist ein vorzugsweise geschmiedetes Basisteil 31 auf. Zu einem zu pflügenden Boden 11 hin endet das Basisteil 31 in einem Schneidenträger 32. An dem Schneidenträger 32 ist ein Schneidelement 33 befestigt. Das Schneidelement 33 ist aus einem Hartwerkstoff, vorzugsweise aus Hartmetall, hergestellt. Es ist mit einem Befestigungsabschnitt 33.1 an einer in eine Werkzeugvorschubrichtung V der Grubberschar 30 zeigende Oberfläche des Basisteils 31 festgelegt, vorzugsweise angelötet, angeklebt oder angeschweißt oder in sonstiger Weise stoffschlüssig daran befestigt. Abgewinkelt zu dem Befestigungsabschnitt 33.1 und entgegen der Werkzeugvorschubrichtung V des Werkzeugsystems 10 ausgerichtet ist ein Ansatzstück 33.2 an den Befestigungsabschnitt 33.1 des Schneidelements 33 angeformt. Zu dem Schneidenträger 32 hin bilden der Befestigungsabschnitt 33.1 und das angrenzende Ansatzstück 33.22 winklig zueinander stehende Flächen aus, welche die vordere Kante des Schneidenträgers 32 umfassen. Zum Boden hin endet das Schneidelement 33 in einer, vorliegend abgerundet ausgeführten, Schneide 33.3. Vorzugsweise ist auch das Ansatzstück 33.2 mit dem Schneidenträger 32 verbunden, insbesondere verlötet.

Im Anschluss an den Befestigungsabschnitt 33.1 des Schneidelements 33 ist eine Vorderseite 31.2 der Grubberschar 30 durch Verschleißschutzelemente 34 gebildet. Dazu sind die Verschleißschutzelement 34 mit der in Werkzeugvorschubrichtung V ausgerichteten Oberfläche des Basisteils 31 verbunden, insbesondere verlötet, verklebt, verschweißt oder in sonstiger Weise stoffschlüssig befestigt. Vorliegend sind die Verschleißschutzelemente 34 quaderförmig ausgeführt. Sie bilden so eine in Werkzeugvorschubrichtung V weisende, stufenfreie Oberfläche aus. An dieser kann Erdreich ohne großen Widerstand vorbeigeführt werden, wenn die Grubberschar 30 durch den Boden 11 gezogen wird.

Gegenüberliegend zur Vorderseite 31.2 der Grubberschar 30 ist das Basisteil 31 durch eine Anlagefläche 31.1 begrenzt. Die Grubberschar 30 liegt mit der Anlagefläche 31.1 an einer Montagefläche 22 des Trägers 20 an. Der Träger 20 unterstützt rückseitig den von dem Boden 11 abgewandten Abschnitt des Basiskörpers 31. Lediglich der vordere Bereich des Basisteils 31 mit dem Schneidenträger 32 ragt über den Träger 20 hinaus. Vorderseitig sind die Verschleißschutzelemente 34 bis in den Bereich des Basisteils 31 geführt, der rückseitig von dem Träger 20 abgestützt wird.

Der Träger 20 ist nicht dargestellt mit einer Bodenbearbeitungsmaschine verbunden. An einem dem Boden 11 zugewandten Endbereich des Trägers 20 ist ein Montagebereich 21 vorgesehen, welcher in Werkzeugvorschubrichtung V die Montagefläche 22 ausbildet. Vorzugsweise ist der Träger 20 rechteckig ausgebildet, wobei sich die in Werkzeugvorschubrichtung V zeigenden Seitenlängen des Rechtecks im Montagebereich 21 stufenförmig verringern. Dabei sind zwischen den Stufen schräge Abschnitte vorgesehen. Im Montagebereich 21 sind Montagebohrungen 23, 24 durch den Träger 20 geführt. Die Montagebohrungen 23, 24 verlaufen dabei von einer, bezogen auf die Werkzeugvorschubrichtung V, Rückseite des Trägers 20 zu seiner Montagefläche 22. Vorzugsweise sind die Montagebohrungen 23, 24 parallel zur Flächennormalen der Montagefläche 22 ausgerichtet. Im gezeigten Ausführungsbeispiel sind die Montagebohrungen 23, 24 rückseitig von den Bereichen der Stufen ausgehend durch den Montagebereich 21 geführt. Die Stufen verlaufen dabei zumindest annähernd parallel zu der Montagefläche 22. Vorliegend sind zwei Montagebohrungen 23, 24 vorgesehen. Es sind jedoch auch Ausführungen mit einer Montagebohrung 23, 24 oder mit mehr als zwei Montagebohrungen 23, 24 denkbar. Zwischen den Montagebohrungen 23, 24 ist der Träger 20 von einer Querbohrung 25 durchdrungen. Diese dient einer möglichen Befestigung von nicht dargestellten Scharflügeln an dem Träger 20.

Korrespondierend zu den Montagebohrungen 23, 24 sind eine erste und eine zweite Schraubaufnahme 35, 36 in das Basisteil 31 der Grubberschar 30 eingebracht. Sie sind, ausgehend von der Anlagefläche 31.1, zur Vorderseite 31.2 der Grubberschar 30 hin ausgerichtet. Die erste und die zweite Schraubaufnahme 35, 36 sind als Sackbohrungen ausgeführt und damit nicht bis zur Vorderseite 31.2 durchführt. Sie weisen jeweils ein Innengewinde auf. Vorzugsweise ist ein Innengewinde M12 vorgesehen. Durch die Montagebohrungen 23, 24 sind zwei Schrauben 12, 13 zu der Grubberschar 30 geführt und in die erste und zweite Schraubaufnahme 35, 36 eingeschraubt. Die Schraubenköpfe der Schrauben 12, 13 liegen an der Rückseite des Trägers 20 an. Durch die Schrauben 12, 13 ist die Grubberschar 30 mit dem Träger 20 verbunden.

Die erste Schraubaufnahme 35 ist durch einen ersten Abstand 39.1 von der Schneide 33.3 des Schneidelements 33 beabstandet, wie dies durch einen Doppelpfeil dargestellt ist. Ein zweiter, ebenfalls durch einen Doppelpfeil markierter Abstand 39.2 trennt die erste Schraubaufnahme 35 von der zweiten Schraubaufnahme 36. Eine Dicke 39.3 des Basisteils 31 im Bereich der ersten und der zweiten Schraubaufnahme 35, 36 ist ebenfalls durch einen Doppelpfeil gekennzeichnet.

Durch die Ausführung der ersten und zweiten Schraubaufnahme 35, 36 als in Werkzeugvorschubrichtung V in das Basisteil 31 eingeformte Sacklöcher wird eine durchgängig geschlossene Vorderseite 31.2 der Grubberschar 30 ermöglicht. Es sind keine von der Vorderseite 31.2 in das Basisteil eingebrachte Schraublöcher mit darin angeordneten Schrauben oder Deflektoren erforderlich, mit denen die Erde gezielt an den Schraublöchern vorbeigelenkt wird. Dadurch wird dem vorbeigleitenden Erdreich ein geringer Widerstand entgegengesetzt. Gleichzeitig bietet die Vorderseite 31.2 dem Erdreich nur geringe Angriffspunkte, wodurch der Verschleiß der Grubberschar deutlich reduziert werden kann. Die Schraubenköpfe der Schrauben 12, 13 sind an der, bezogen auf die Werkzeugvorschubrichtung V, Rückseite des Trägers 20 angeordnet. Sie sind somit sowohl durch die Grubberschar 30 wie auch durch den Träger 20 gegenüber der vorbeiströmenden Erde geschützt. Der Abrieb der Schrauben 12, 13 und insbesondere der Schraubenköpfe kann so gering gehalten werden. Auch ist es zwar denkbar, aber nicht mehr erforderlich, die Schraubenköpfe in Senkungen der Montagebohrungen 23, 24 anzuordnen. Daher kann sich keine Erde in den Senklöchern über den Schraubenköpfen festsetzten. Die Schraubenköpfe mit den daran angebrachten Werkzeugaufnahmen sind somit auch nach langem Einsatz des Werkzeugsystems 10 leicht zugängig. Durch den geringen Abrieb bleiben auch an den Schraubenköpfen angeformte Werkzeugaufnahmen einsatzfähig. Damit ist ein einfacher Austausch der Grubberschar 30 möglich.

In der Anordnung gemäß Figur 1 ist der vordere Bereich des Basisteils 31 in Werkzeugvorschubrichtung V durch Verschleißschutzelemente 34 abgedeckt. Die Verschleißschutzelemente 34 sind vorzugsweise aus einem Hartwerkstoff, insbesondere aus Hartmetall, hergestellt. Es können jedoch auch andere Hartwerkstoffe, beispielsweise Keramiken, sonstige Sintermaterialien oder diamantbasierte Materialien verwendet werden. Auch ist eine zusätzliche Hartstoffbeschichtung der Verschleißschutzelemente 34, beispielsweise mit polykristallinem Diamant, denkbar. Durch die Verschleißschutzelemente 34 ist der mechanisch besonders belastete vordere Bereich des Basisteils 31 abgedeckt und vor Verschleiß geschützt. Die Verschleißschutzelemente sind dabei bis in den Bereich des Basisteils 31 geführt, welcher rückseitig durch den Träger 20 abgestützt ist. Dadurch kann verhindert werden, dass der vordere, nicht vom Träger 20 hinterlegte Bereich des Basisteils 31 durch Abrieb dünner wird und in Folge dessen beim Pflügen bricht.

Durch den in Richtung zum Boden 11 über den Träger 20 stehenden Bereich der Grubberschar 30 ist ein Hebel gebildet. In diesem Bereich angreifende Kräfte führen zu einem auf die Grubberschar 30 übertragenen Drehmoment. Dieses kann dazu führen, dass die Schraubverbindungen auf Zug belastet werden. Die Schraubverbindungen sind daher so ausgelegt, dass sie auch hohe Zugkräfte abfangen können. Beispielsweise können Schrauben 12, 13 der Stärke M12 verwendet werden, welche ausreichend belastbar sind, um die auftretenden Zugkräfte abzufangen. Die Dicke 39.3 des Basisteils 31 ist im Bereich der Schraubaufnahmen 35, 36 so auszulegen, dass die Schrauben 12, 13 ausreichend tief eingeschraubt werden können. Sie sollte daher mindestens 5 mm vorzugsweise 9 mm betragen. Vorliegend ist ein Basisteil 31 mit einer Dicke 39.3 von 28mm vorgesehen. Damit ist gewährleistet, dass in Verlängerung der Schraubaufnahmen 35, 36 genügend Material des Basisteils 31 verbleibt, um die Schraubaufnahmen 36, 36 auch bei fortschreitendem Verschleiß der Vorderseite 31.2 in diesem Bereich geschlossen zu halten. Weiterhin verhindert die so gewährleistete Materialstärke einen Bruch des Basisteils 31 auf Grund von Zugspannungen, welche durch die genannte Hebelbildung im Bereich der in Werkzeugvorschubrichtung V weisenden Oberfläche des Basisteils ausgebildet sein können. Vorteilhaft sind die Abschlüsse der ersten und zweiten Schraubaufnahme 35, 36 abgerundet. Spannungsspitzen durch die eingebrachten Zug- und an den inneren Oberflächen der Schraubaufnahmen 35, 26 auch Durchkräfte können so vermieden oder zumindest reduziert werden.

Durch die Verwendung von zwei Schraubverbindungen kann ohne zusätzliche Maßnahmen verhindert werden, dass sich die Grubberschar 30 um eine durch die Schraubverbindung gebildete Achse drehen kann. Weiterhin werden Verbiegungen des Basisteils 31 weitestgehend vermieden. Dadurch kann die Bruchgefahr für die Grubberschar 30 vermindert werden. Um die einwirkenden Kräfte sicher abfangen zu können ist vorzugsweise der zweite Abstand 39.2 zwischen der ersten und der zweiten Schraubaufnahme 35, 36 in einem Bereich zwischen 20 mm und 500 mm vorgesehen. Um die Verbiegung des vorderen Bereiches der Grubberschar 30 gering zu halten ist vorzugsweise der Abstand zwischen der ersten Schraubaufnahme 35 und der Schneide 33 in einem Bereich zwischen 20 mm und 300 mm vorgesehen.

Figur 2 zeigt das Werkzeugsystem 10 in einer Ansicht entsprechend Figur 1 mit einem erweiterten, mittels Verschleißschutzelementen 34 abgedeckten Bereich des Basisteils 31 der Grubberschar 30. Gleiche Bauteile sind dabei wie zu Figur 1 eingeführt bezeichnet.

Die erste und die zweite Schraubaufnahme 35, 36 sind auch hier als Sacklöcher ausgeführt. Ausgehend von dem Befestigungsabschnitt 33.1 des Schneidelements 33 ist die in Werkzeugvorschubrichtung V weisende Oberfläche des Basisteils 31 durch Verschleißschutzelemente 34, wie diese in ihrer Funktion und in ihrem Aufbau bereits zu Figur 1 beschrieben sind, bis über den Bereich der ersten Schraubaufnahme 35 abgedeckt. Dadurch kann ein hoher Verschleiß des Basisteils (31) in dem mechanisch noch stark belasteten Bereich der ersten Schraubaufnahme 35 vermieden werden. Es kann so verhindert werden, dass die erste Schraubaufnahme 35 durch Abrieb zur Vorderseite 31.2 der Grubberschar 30 hin geöffnet wird. Ebenfalls kann verhindert werden, dass die verbleibende Materialstärke am Ende der ersten Schraubaufnahme 35 so weit verringert wird, dass sie sich bei Belastung zu einem potentiellen Bruchausgang entwickelt.

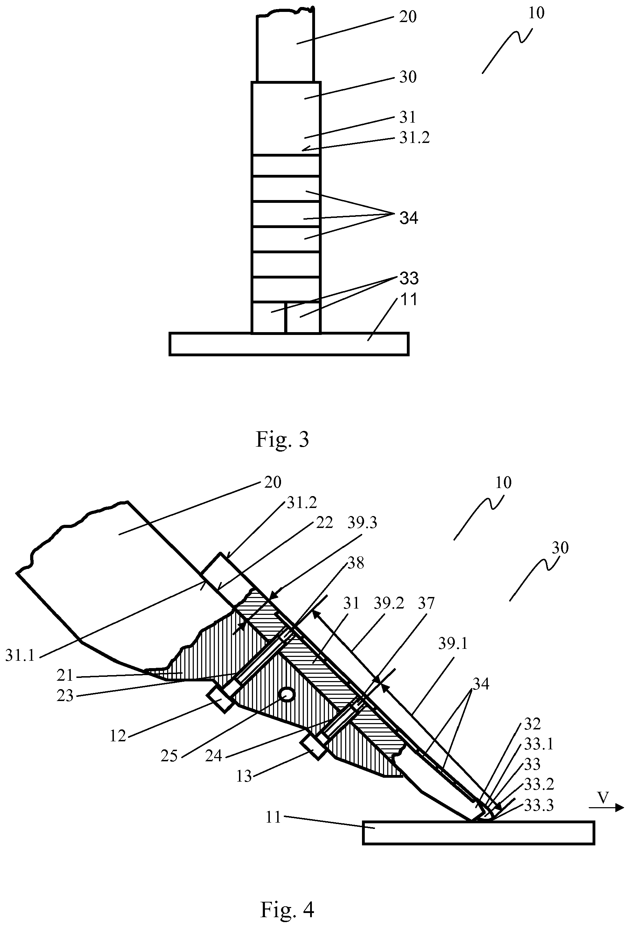

Figur 3 zeigt das in Figur 2 gezeigte Werkzeugsystem 10 in einer Ansicht von vorne. Die Vorderseite 31.2 der Grubberschar 30 ist durchgängig geschlossen, also ohne Bohrungen, ausgebildet. Dadurch kann ein Verschleiß der Bohrungen oder darin angeordneter Schraubenteile vermieden werden. Die aus Hartwerkstoff hergestellten Verschleißschutzelemente 34 decken die vordere Oberfläche des Basisteils 31 bis über den Bereich der in Figur 2 gezeigten ersten Schraubaufnahme 35 ab. Damit ist der gesamte, dem Boden 11 zugewandte Bereich des Basisteils 31 in Werkzeugvorschubrichtung V vor Verschleiß geschützt. Die Grubberschar 30 steht seitlich über den Träger 20 über. Abgetragenes Erdreich wird so an dem Träger 20 vorbeigelenkt. Denkbar ist es, den Träger 20 im Anschluss an die Grubberschar 30 durch ein mit dem Träger 20 verbundenes, nicht dargestelltes Leitelement zusätzlich vor Verschleiß zu schützen.

Zum Boden 11 hin sind zwei nebeneinander angeordnete Schneidelemente 33 vorgesehen. Durch die Segmentierung der Schneidelemente 33 werden kleinere und damit bruchfestere Schneidelemente 33 erhalten. Risse können nicht von einem Segment auf das andere übertragen werden. Auch die Vorderseite 31.2 der Grubberschar 30 ist durch eine Vielzahl von Verschleißschutzelemente 34 gebildet. Die Verwendung von vielen aneinandergereihten Verschleißschutzelementen 34 hat ebenfalls den Vorteil einer verringerten Bruchgefahr und einer unterbundenen Rissfortpflanzung zwischen den Elementen.

Figur 4 zeigt das Werkzeugsystem 10 in einer Ansicht entsprechend Figur 2 mit einer alternativen Ausführung von in dem Basisteil 31 angeordneten dritten und vierten Schraubaufnahmen 37, 38. Gleiche Bauteile sind wie zuvor eingeführt gleich bezeichnet und ausgeführt.

Im Gegensatz zu den in den Figuren 1 und 2 gezeigten Ausführungen sind die dritte und vierte Schraubaufnahme 37, 38 als Durchgangsbohrungen durch das Basisteil 31 ausgeführt. In Werkzeugvorschubrichtung V sind die dritte und vierte Schraubaufnahme 37, 38 durch Verschleißschutzelemente 34 abgedeckt. Die Verschleißschutzelemente 34 sind dabei, ausgehend von dem Schneidelement 33, bis über den Bereich der am weitesten von dem Schneidelement 33 entfernten vierten Schraubaufnahme 38 auf der in Werkzeugvorschubrichtung V des Werkzeugsystems 10 weisenden Oberfläche des Basisteils 31 angeordnet. Die Vorderseite 31.2 der Grubberschar 30 ist somit weitestgehend vor Verschleiß geschützt.

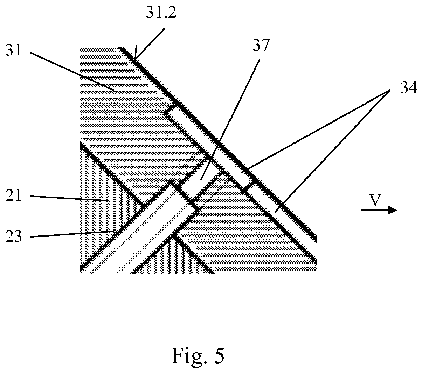

Figur 5 zeigt einen Ausschnitt des in Figur 4 gezeigten Werkzeugsystems 10 im Bereich der vierten Schraubaufnahme 38. Durch die Verschleißschutzelemente 34 ist die vierte Schraubaufnahme 38 in Werkzeugvorschubrichtung V verschlossen. Dadurch wird verhindert, dass Erde in die vierte Schraubaufnahme 38 eindringt. Ein Verschleiß der ersten Schraube 12 oder der in Figur 4 gezeigten vierten Schraubaufnahme 38 kann so verhindert werden. Vorteilhaft ist die vierte Schraubaufnahme 38 und auch die in Figur 4 gezeigte dritte Schraubaufnahme 38 jeweils durch ein einzelnes Verschleißschutzelement 34 abgedeckt. Das jeweilige Verschleißschutzelement 34 ist dabei so dimensioniert, dass es umlaufend über den Rand der dritten und vierten Schraubaufnahme 38 übersteht. Durch diese Anordnung kann das Verschleißschutzelement 34 umlaufend zu der ersten und zweiten Schraubaufnahme 38 mit der in Werkzeugvorschubrichtung V weisenden Oberfläche des Basisteils 31 verbunden, insbesondere verlötet, werden. Dadurch kann sichergestellt werden, dass kein Fremdmaterial in die dritte oder vierte Schraubaufnahme 37, 38 gelangt. Vorteilhaft sind keine Übergänge zwischen zwei Verschleißschutzelementen 34 im Bereich der dritten und vierten Schraubaufnahme 37, 38 angeordnet. Spannungsspitzen können so in dem durch die Schraubaufnahmen 37, 38 bereits geschwächten Bereich des Basisteils 31 vermieden werden. Aus diesem Grund ist es vorteilhaft, auch bei als Sackloch ausgeführten ersten und zweiten Schraubaufnahmen 35, 36, wie sie in den Figuren 1 und 2 gezeigt sind, die Verschleißschutzelemente 34 so anzuordnen und zu dimensionieren, dass jeweils nur ein Verschleißschutzelement 34 die Projektion der ersten und zweiten Schraubaufnahme 35, 36 in Richtung ihrer Längserstreckung auf die in Werkzeugvorschubrichtung V weisende Oberfläche des Basisteils 31 überdeckt. Vorteilhaft steht das jeweilige Verschleißschutzelement 34 jeweils mindestens 1 mm über den Rand bzw. der Projektion des Randes der zugeordneten Schraubaufnahme 35, 36, 37, 38 über. Dadurch ist umlaufend eine ausreichend große Kontaktfläche für die Anordnung der Lötung gebildet.

Durch die gezeigten Anordnungen kann eine geschlossene, zumindest teilweise von Verschleißschutzelementen 34 gebildete Vorderseite 31.2 der Grubberschar 30 erzielt werden. Diese bietet vorbeigleitendem Erdreich keine Angriffspunkte, wodurch der Verschleiß der Grubberschar 30 reduziert wird. Denkbar ist es, Rillen oder ähnliches in die insbesondere nicht von Verschleißschutzelementen 34 gebildete Vorderseite 31.2 der Grubberschar 30 in die Oberfläche des Basisteils 31 einzuformen. In den Rillen kann sich Erde festsetzen. Vorbeigeführte Erde gleitet so an der festgesetzten Erde vorbei und kommt nicht in Kontakt mit der Oberfläche des Basisteils 31. Dadurch kann der Verschleiß der Vorderseite 31.2 der Grubberschar 30 in nicht von Verschleißschutzelementen 34 abgedeckten Bereichen verringert werden. Die Schrauben 12, 13 sind von der Rückseite kommend durch den Träger 20 zu der Grubberschar 30 geführt. Die von der Grubberschar 30 abgetragene Erde wird von der Grubberschar 30 und dem Träger 20 an den Schrauben 12, 13 und insbesondere deren Schraubenköpfen vorbeigeführt. Der Verschleiß der Schrauben 12, 13 und der Schraubenköpfe mit den daran angeformten Werkzeugaufnahmen ist somit sehr gering. Damit kann auch nach langer Betriebsdauer ein geeignetes Werkzeug sicher an den Schrauben 12, 13 angesetzt und diese geöffnet werden.

## Patentansprüche

1. Grubberschar (30) für eine landwirtschaftliche Bodenbearbeitungsmaschine mit einem Basisteil (31), das an einem Schneidenträger (32) ein Schneidelement (33) aufweist, wobei das Basisteil (31) zumindest eine Schraubaufnahme (35, 36, 37, 38) zur Befestigung an einem Träger (20), insbesondere einem Zinken der landwirtschaftlichen Bodenbearbeitungsmaschine, aufweist, wobei das Basisteil (31) gegenüberliegend zu einer in Werkzeugvorschubrichtung ausgerichteten Vorderseite (31.2) der Grubberschar (30) durch eine Anlagefläche (31.1) begrenzt ist, **dadurch gekennzeichnet, dass** die Schraubaufnahme (35, 36, 37, 38) als Sackloch mit einem Innengewinde ausgeführt ist, welche ausgehend von der Anlagefläche (31.1), zu Vorderseite (31.2) der Grubberschar (30) hin ausgerichtet ist , oder dass die Schraubaufnahme (35, 36, 37, 38) als Durchgangsbohrung mit einem Innengewinde ausgeführt ist, welche in Werkzeugvorschubrichtung (V) durch zumindest ein Verschleißschutzelement (34) abgedeckt ist.

2. Grubberschar (30) nach Anspruch 1,
**dadurch gekennzeichnet,**
**dass** die in Werkzeugvorschubrichtung (V) ausgerichtete Vorderseite (31.2) der Grubberschar (30) zumindest teilweise mit Verschleißschutzelementen (34) bedeckt ist, dass zumindest eines der Verschleißschutzelemente (34) bis an das Schneidelement (33) herangeführt ist und dass die Verschleißschutzelemente (34) bis über den Bereich zumindest einer Schraubaufnahme (35, 36, 37, 38) angeordnet sind.

3. Grubberschar (30) nach Anspruch 1 oder 2,
**dadurch gekennzeichnet,**
**dass** die als Sackloch ausgeführte Schraubaufnahme (35, 36, 37, 38) an ihrem inneren Ende abgerundet ist oder dass Übergänge zwischen den inneren Oberflächen der als Sackloch ausgeführten Schraubaufnahme (35, 36, 37, 38) abgerundet sind.

4. Grubberschar (30) nach einem der Ansprüche 1 bis 3,
**dadurch gekennzeichnet,**
**dass** das Gewinde der Schraubaufnahme (35, 36, 37, 38) ausgebildet ist, um zusammen mit einer Schraube eine selbsthemmende Schraubverbindung zu bilden.

5. Grubberschar (30) nach einem der Ansprüche 1 bis 4,
**dadurch gekennzeichnet,**
**dass** die in Richtung der Längserstreckung der zumindest einen Schraubaufnahme (35, 36, 37, 38) gemessene Dicke des Basisteils (31) im Bereich der zumindest einen Schraubaufnahme (35, 36, 37, 38) zwischen 5 mm und 120 mm, vorzugsweise zwischen 9mm und 35mm, liegt.

6. Grubberschar (30) nach einem der Ansprüche 1 bis 5,
**dadurch gekennzeichnet,**
**dass** der Abstand der zumindest einen, in Werkzeugvorschubrichtung (V) vorderen Schraubaufnahme (35, 36, 37, 38) zu einer Schneide (33.3) des Schneidelements (33) in einem Bereich zwischen 10 mm und 350 mm liegt.

7. Grubberschar (30) nach einem der Ansprüche 1 bis 6,
**dadurch gekennzeichnet,**
**dass** zwei Schraubaufnahmen (35, 36, 37, 38) in dem Basisteil (31) vorgesehen sind und dass der Abstand zwischen den Schraubaufnahmen (35, 36, 37, 38) in einem Bereich zwischen 20 mm und 500 mm liegt.

8. Grubberschar (30) nach einem der Ansprüche 1 bis 7,
**dadurch gekennzeichnet,**
**dass** die als Durchgangsbohrung ausgeführte Schraubaufnahme (35, 36, 37, 38) oder der Bereich, unter dem die als Sackloch ausgeführte Schraubaufnahme (35, 36, 37, 38) endet, zur Vorderseite (31.2) der Grubberschar (30) hin von einem einzelnen Verschleißschutzelement (34) vollständig abgedeckt ist, wobei die in der Ebene der Vorderseite (31.2) der Grubberschar (33) gemessenen Dimensionen des die Schraubaufnahme (35, 36, 37, 38) abdeckenden Verschleißschutzelements (34) derart gewählt sind, dass das Verschleißschutzelement (34) umlaufend über den in die Ebene der Vorderseite (31.2) projizierten Rand der Schraubaufnahme (35, 36, 37, 38) übersteht, insbesondere, dass das Verschleißschutzelement (34) umlaufend zumindest 1 mm über den in die Ebene der Vorderseite (31.2) projizierten Rand der Schraubaufnahme (35, 36, 37, 38) übersteht.

9. Werkzeugsystem (10) für eine landwirtschaftliche Bodenbearbeitungsmaschine mit einer Grubberschar (30) nach einem der Ansprüche 1 bis 8 und einem Träger (20), insbesondere einem Zinken der landwirtschaftlichen Bodenbearbeitungsmaschine, wobei der Träger (20) zumindest eine Montagebohrung (23, 24) zur Befestigung der Grubberschar (30) an dem Träger (20) aufweist und wobei die Grubberschar (30) durch zumindest eine Schraube (12, 13) an dem Träger (20) gehalten ist,
**dadurch gekennzeichnet,**
**dass** die Grubberschar (30) mit ihrer Anlagefläche (31.1) an dem Träger (20) anliegt, und dass die zumindest eine Schraube (12, 13) von der entgegen der Werkzeugvorschubrichtung (V) liegenden Seite des Trägers (20) durch die zumindest eine Montagebohrung (23, 24) geführt und in die Schraubaufnahme (35, 36, 37, 38) eingeschraubt ist.

10. Werkzeugsystem (10) nach Anspruch 9,
**dadurch gekennzeichnet,**
**dass** die zumindest eine Schraube (12, 13) bei montiertem Werkzeugsystem (10) beabstandet zu einem inneren Ende der als Sackloch ausgeführte Schraubaufnahme (35, 36, 37, 38) oder beabstandet zu dem Verschleißschutzelement (34), welches die als Durchgangsbohrung ausgeführte Schraubaufnahme (35, 36, 37, 38) abdeckt, endet.

## Claims

1. A cultivator (30) for an agricultural soil working machine, having a base part (31), which has a cutting element (33) on a blade holder (32), the base part (31) having at least one screw receptacle (35, 36, 37, 38) for fastening to a carrier (20), in particular a tine of the agricultural soil working machine, the base part (31) being delimited by a contact surface (31.1) opposite a front side (31.2) of the cultivator (30) oriented in the tool feed direction, **characterised in that**
the screw receptacle (35, 36, 37, 38) is designed as a blind hole having an internal thread which, starting from the contact surface (31.1), is oriented towards the front side (31.2) of the cultivator (30), or **in that** the screw receptacle (35, 36, 37, 38) is designed as a through-hole having an internal thread which is covered in the tool feed direction (V) by at least one anti-wear element (34).

2. The cultivator (30) according to claim 1,
**characterised in that**
the front side (31.2) of the cultivator (30) oriented in the tool feed direction (V) is at least partly covered with anti-wear elements (34), **in that** at least one of the anti-wear elements (34) is brought up to the cutting element (33) and **in that** the anti-wear elements (34) are arranged over the region of at least one screw receptacle (35, 36, 37, 38).

3. The cultivator (30) according to claim 1 or 2,
**characterised in that**
the screw receptacle designed as a blind hole (35, 36, 37, 38) is rounded at its inner end or **in that** transitions between the inner surfaces of the screw receptacle designed as a blind hole (35, 36, 37, 38) are rounded.

4. The cultivator (30) according to any one of claims 1 to 3,
**characterised in that**
the thread of the screw receptacle (35, 36, 37, 38) is designed to form a self-locking screw connection together with a screw.

5. The cultivator (30) according to any one of claims 1 to 4,
**characterised in that**
the thickness of the base part (31) measured in the direction of the longitudinal extent of the at least one screw receptacle (35, 36, 37, 38) in the region of the at least one screw receptacle (35, 36, 37, 38) is between 5 mm and 120 mm, preferably between 9 mm and 35 mm.

6. The cultivator (30) according to any one of claims 1 to 5,
**characterised in that**
the distance between the at least one leading screw receptacle (35, 36, 37, 38) in the tool feed direction (V) and a cutting edge (33.3) of the cutting element (33) is in a range between 10 mm and 350 mm.

7. The cultivator (30) according to any one of claims 1 to 6,
**characterised in that**
two screw receptacles (35, 36, 37, 38) are provided in the base part (31) and **in that** the distance between the screw receptacles (35, 36, 37, 38) is in a range between 20 mm and 500 mm.

8. The cultivator (30) according to any one of claims 1 to 7,
**characterised in that**
the screw receptacle (35, 36, 37, 38) designed as a through-hole or the region under which the screw receptacle (35, 36, 37, 38) designed as a blind hole ends is completely covered towards the front side (31.2) of the cultivator (30) by a single anti-wear element (34), the dimensions of the anti-wear element (34) that covers the screw receptacle (35, 36, 37, 38) measured in the plane of the front side (31.2) of the cultivator (33) being selected such that the anti-wear element (34) protrudes all the way around beyond the edge of the screw receptacle (35, 36, 37, 38) projected into the plane of the front side (31.2), in particular such that the anti-wear element (34) protrudes all the way around at least 1 mm beyond the edge of the screw receptacle (35, 36, 37, 38) projected into the plane of the front side (31.2).

9. A tool system (10) for an agricultural soil working machine having a cultivator (30) according to any one of claims 1 to 8 and a carrier (20), in particular a tine of the agricultural soil working machine, the carrier (20) having at least one assembly hole (23, 24) for fastening the cultivator (30) to the carrier (20) and the cultivator (30) being held on the carrier (20) by at least one screw (12, 13),
**characterised in that**
the cultivator (30) lies with its contact surface (31.1) on the carrier (20), and **in that** the at least one screw (12, 13) is guided from the side of the carrier (20) positioned counter to the tool feed direction (V) through the at least one assembly hole (23, 24) and is screwed into the screw receptacle (35, 36, 37, 38).

10. The tool system (10) according to claim 9,
**characterised in that**
when the tool system (10) is assembled, the at least one screw (12, 13) is spaced apart from an inner end of the screw receptacle (35, 36, 37, 38) designed as a blind hole, or is spaced from the anti-wear element (34) covering the screw receptacle (35, 36, 37, 38) designed as a through hole.

## Revendications

1. Soc de cultivateur (30) pour une machine agricole de travail du sol avec une partie de base (31), qui présente un élément de coupe (33) sur un porte-lame (32), la partie de base (31) ayant au moins un logement de vis (35, 36, 37, 38) pour la fixation à un support (20), en particulier une dent de la machine agricole de travail du sol, la partie de base (31) étant délimitée par une surface de contact (31.1) opposée à une face avant (31.2) du soc de cultivateur (30) orientée dans la direction d'avance de l'outil,
**caractérisé en ce que**
le logement de vis (35, 36, 37, 38) est conçu comme un trou borgne avec un filetage interne, qui, à partir de la surface de contact (31, 1), est orienté vers l'avant (31.2) du soc de cultivateur (30), ou **en ce que** le logement de vis (35, 36, 37, 38) est conçu comme un trou traversant avec un filetage intérieur, qui est recouvert dans la direction d'avance de l'outil (V) par au moins un élément de protection contre l'usure (34).

2. Soc de cultivateur (30) selon la revendication 1,
**caractérisé en ce que**
l'avant (31.2) du soc de cultivateur (30) orienté dans la direction d'avance de l'outil (V) est au moins partiellement recouvert d'éléments de protection contre l'usure (34), **en ce qu'**au moins l'un des éléments de protection contre l'usure (34) est amené jusqu'à l'élément de coupe (33) et **en ce que** les éléments de protection contre l'usure (34) sont disposés jusqu'à la zone d'au moins un logement de vis (35, 36, 37, 38).

3. Soc de cultivateur (30) selon la revendication 1 ou 2,
**caractérisé en ce que**
le logement de vis (35, 36, 37, 38) conçu comme un trou borgne est arrondi à son extrémité intérieure ou **en ce que** les transitions entre les surfaces intérieures du logement de vis (35, 36, 37, 38) conçu comme un trou borgne sont arrondies.

4. Soc de cultivateur (30) selon l'une quelconque des revendications 1 à 3,
**caractérisé en ce que**
le filetage du logement de vis (35, 36, 37, 38) est conçu pour former une liaison à vis autobloquante avec une vis.

5. Soc de cultivateur (30) selon l'une quelconque des revendications 1 à 4,
**caractérisé en ce que**
l'épaisseur de la partie de base (31) mesurée dans le sens de l'étendue longitudinale du au moins un logement de vis (35, 36, 37, 38) dans la région du au moins un logement de vis (35, 36, 37, 38) est comprise entre 5 mm et 120 mm, de préférence entre 9 mm et 35 mm.

6. Soc de cultivateur (30) selon l'une quelconque des revendications 1 à 5,
**caractérisé en ce que**
la distance entre l'au moins un logement de vis (35, 36, 37, 38) avant dans la direction d'avance de l'outil (V) et un bord coupant (33.3) de l'élément de coupe (33) se situe dans une plage comprise entre 10 mm et 350 mm.

7. Soc de cultivateur (30) selon l'une quelconque des revendications 1 à 6,
**caractérisé en ce que**
deux logements de vis (35, 36, 37, 38) sont prévus dans la partie de base (31) et **en ce que** la distance entre les logements de vis (35, 36, 37, 38) est comprise entre 20 mm et 500 mm.

8. Soc de cultivateur (30) selon l'une quelconque des revendications 1 à 7,
**caractérisé en ce que**
le logement de vis (35, 36, 37, 38) conçu comme un trou traversant, ou la zone sous laquelle se termine le logement de vis (35, 36, 37, 38) conçu comme un trou borgne, est entièrement recouvert par un élément de protection contre l'usure individuel (34) sur la face avant (31.2) du soc de cultivateur (30), les dimensions de l'élément de protection contre l'usure (34) recouvrant le logement de vis (35, 36, 37, 38) mesurées dans le plan de la face avant (31.2) du soc de cultivateur (33) étant sélectionnées de telle sorte que l'élément de protection contre l'usure (34) dépasse tout autour du bord du logement de vis (35, 36, 37, 38) projeté dans le plan de la face avant (31.2), en particulier de telle que l'élément de protection contre l'usure (34) dépasse sur au moins 1 mm tout autour du bord du logement de vis (35, 36, 37, 38) projeté dans le plan de la face avant (31.2).

9. Système d'outil (10) pour une machine agricole de travail du sol avec un soc de cultivateur (30) selon l'une quelconque des revendications 1 à 8 et un support (20), en particulier une dent de la machine agricole de travail du sol, le support (20) présentant au moins un trou de montage (23, 24) pour la fixation du soc de cultivateur (30) au support (20) et le soc de cultivateur (30) étant maintenu sur le support (20) par au moins une vis (12, 13), **caractérisé en ce que**
le soc de cultivateur (30) repose avec sa surface de contact (31.1) sur le support (20), et **en ce que** l'au moins une vis (12, 13) du côté du support (20) se trouvant en face du sens d'avance de l'outil (V) traverse l'au moins un trou de montage (23, 24) et est vissée dans le logement de vis (35, 36, 37, 38).

10. Système d'outil (10) selon la revendication 9,
**caractérisé en ce que**
l'au moins une vis (12, 13), lorsque le système d'outil (10) est monté, se termine à distance d'une extrémité intérieure du logement de vis (35, 36, 37, 38) conçu comme un trou borgne, ou à distance de l'élément de protection contre l'usure (34), qui couvre le logement de vis (35, 36, 37, 38) qui est conçu comme un trou traversant.
